# EUROPÄISCHE PATENTSCHRIFT

(11) **EP 1 080 539 B1**
(45) Veröffentlichungstag und Bekanntmachung des Hinweises auf die Patenterteilung: **02.05.2002**
(21) Anmeldenummer: 98919026.9
(22) Anmeldetag: 20.05.1998
(51) Int. Cl.: H04B 1/38, H04Q 7/32

(54) **VERFAHREN UND ENTSPRECHEND ANGEPASSTE VORRICHTUNGEN ZUR BEHANDLUNG VON DATEN AUS EXTERNEN VORRICHTUNGEN**
METHOD AND CORRESPONDING DEVICES FOR PROCESSING DATA FROM EXTERNAL DEVICES
PROCEDE ET DISPOSITIF CORRESPONDANT DESTINES AU TRAITEMENT DE DONNEES ISSUES DE DISPOSITIFS EXTERNES

(43) Veröffentlichungstag der Anmeldung: 07.03.2001
(73) Patentinhaber: Swisscom Mobile AG, 3050 Bern (CH)
(72) Erfinder: RITTER, Rudolf, CH-3052 Zollikofen (CH); RUPRECHT, Jürg, CH-3014 Bern (CH)
(74) Vertreter: Scheuzger, Beat Otto
(86) Internationale Anmeldenummer: CH9800211
(87) Internationale Veröffentlichungsnummer: WO9960713

(56) Entgegenhaltungen:
- EP-A- 0 665 655
- WO-A-97/03534
- DE-C- 19 618 218
- US-A- 5 636 264
- US-A- 5 664 012

## Beschreibung

Die vorliegende Erfindung betrifft ein Verfahren und entsprechend angepasste Vorrichtungen zur Behandlung von Daten aus externen Vorrichtungen. Insbesondere betrifft die vorliegende Erfindung ein Erweiterungsmodul für Mobilfunktelefone, welches mit einem Mobilfunktelefon über eine elektrische Schnittstelle entfernbar verbunden werden kann, sowie ein Verfahren und eine entsprechend angepasste Chipkarte zur Behandlung von Daten, die über kontaktlose Schnittstellen von externen Vorrichtungen empfangen werden.

Bekannte Erweiterungsmodule für Mobilfunktelefone dienen dazu ein Mobilfunktelefon mit zusätzlichen Batterien zu versehen, um damit die Betriebsdauer eines Mobilfunktelefons, unabhängig von einer externen Stromversorgung, zu verlängern. Ein solches Erweiterungsmodul, welches zusätzlich auch über ein Modem, eine CPU und Speicher zum Aufnehmen von Gesprächen und Nachrichten, sowie über ein Interface zum Aufnehmen einer Chipkarte mit abgespeicherten Telefonnummern verfügt, ist im Patentdokument US 5 490 202 beschrieben.

Ein anderes Erweiterungsmodul, welches im Patendokument US 5 711 013 beschrieben ist, verfügt über Signalverarbeitungsfunktionen, beispielsweise Datenumformatierungsfunktionen, die wahlweise den Kommunikationsfunktionen des betreffenden Mobilfunktelefons zugeschaltet werden können.

Andere bekannte Erweiterungsmodule für Mobilfunktelefone dienen als Adapter um ein Mobilfunktelefon mit einer Basisstation, beispielsweise in einem Auto, zu verbinden, so dass mittels einem betreffenden Mobilfunktelefon Gespräche geführt werden können, ohne dass der Benutzer dabei seine Hände benützen muss. Ähnliche Adapter werden dazu verwendet ein Mobilfunktelefon mit dem Modem eines mobilen Computers zu verbinden, so dass dieser drahtlos Daten übertragen und empfangen kann. Ein Adapter für analoge oder digitale Mobilfunktelefone von verschiedenen Herstellern, der dazu dient diese Mobilfunktelefone mit einer externen Vorrichtung zu verbinden, ist in der Patentanmeldung WO 97/33384 beschrieben.

In der Patentschrift US 5636264 wird ein Mobilfunktelefon mit einem Erweiterungsmodul beschrieben, das einen Infrarot-Transceiver umfasst für die kontaktlose Kommunikation mit einer externen Vorrichtung, ausserhalb des Mobilfunktelefons.

Es ist die Aufgabe dieser Erfindung ein neues Erwelterungsmodul für Mobilfunktelefone sowie ein entsprechendes neues Verfahren vorzuschlagen.

Gemäss der vorliegenden Erfindung wird dieses Ziel Insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere wird dieses Ziel durch die Erfindung dadurch erreicht, dass das Erweiterungsmodul für Mobilfunktelefone, welches mit einem Mobilfunktelefon, zum Beispiel ein Mobilfunktelefon für ein GSM- oder ein UMTS-Netz, über eine externe, elektrische Schnittstelle, die ins Gehäuse des Erweiterungsmoduls, respektive ins Gehäuse des genannten Mobilfunktelefons integriert ist, entfernbar verbunden werden kann, mindestens eine kontaktlose Schnittstelle umfasst, mittels welcher Daten vom Mobilfunktelefon, die über die elektrische Schnittstelle ins Erweiterungsmodul geleitet werden, auf eine sich ausserhalb des genannten Mobilfunktelefons befindende externe Vorrichtung übermittelt werden können, und mittels welcher von der externen Vorrichtung ausgesandte Daten empfangen und über die elektrische Schnittstelle ans Mobilfunktelefon geleitet werden können, und dass das Erweiterungsmodul zusätzlich einen Radioempfänger umfasst, zum Empfang von Radioprogrammen mit programmbegleitenden digitalen Daten, welche über die elektrische Schnittstelle an das Mobilfunktelefon geleitet werden können.

In einer Variante umfasst die kontaktlose Schnittstelle mindestens eine Spule und ein damit verbundenes Elektronikmodul, mittels welchen Daten in Form von elektromagnetischen Wellen mit einer externen Vorrichtung ausgetauscht werden können.

In einer weiteren Variante umfasst die kontaktlose Schnittstelle, zusätzlich oder als Alternative, mindestens einen ins Gehäuse des Erweiterungsmoduls integrierten Infrarot-Sender/Empfänger und ein damit verbundenes Elektronikmodul, mittels weichen Daten in Form von Infrarotstrahlen mit einer externen Vorrichtung ausgetauscht werden können.

Vorzugsweise können die Daten, die über die elektrische Schnittstelle ans Mobilfunktalefon geleitet werden, an eine mit dem Mobilfunktelefon entfernbar verbundene Chipkarte, zum Beispiel eine SIM-Karte, weitergeleitet werden. Dies hat den Vorteil, dass die Daten dort mittels Softwareprogrammen weiterbehandelt werden können.

Vorteilhafterweise können die über die elektrische Schnittstelle ans Mobilfunktelefon geleiteten Daten auf einem Display des Mobilfunktelefons dargestellt und, in einer Variante, mit Manipulationen, die mittels Bedienungselementen des Mobilfunktelefons gewählt werden, durchgeblättert werden. Dies hat den offensichtlichen Vorteil, dass Infmmationen visueil und interaktiv wahrgenommen werden können.

Vorzugsweise können die über die elektrische Schnittstelle ans Mobilfunktelefon geleiteten Daten mittels Bedienungselementen selektiert und durch vordefinierte Funktionen weiterbehandelt werden. Zum Beispiel können Daten in Abhängigkeit von den selektierten Daten via die elektrische Schnittstelle über die kontaktlose Schnittstelle an externe Vorrichtungen übermittelt werden oder mittels Kurzmeldungen, zum Beispiel SMS-Kurzmeldungen, USSD-Daten oder andere Datagramme, über ein Mobllnetz, zum Beispiel ein GSM- oder UMTS-Netz, an ein Dienstleistungszentrum übermittelt werden. Dies hat den Vorteil, dass dadurch beispielsweise die Einwegkommunikation des Radlos auf eine Zweiwegkommunikation erweitert werden kann.

Vorzugsweise verfügt die mit dem Mobilfunktelefon entfernber verbundene Chipkarte über programmierte Mittel um in ihrem Speicher gespeicherte Daten oder mittels Bedienungselementen des Mobilfunktelefons eingegebene Daten über die elektrische Schnittstelle an die kontaktlose Schnittstelle zur Übermittlung an eine externe Vorrichtung zu leiten.

In einer Variante verfügt das Erweiterungsmodul über einen elektroakustischen Wandler, der mit dem Radioempfänger verbunden ist, beispielsweise über einen Lautsprecher, der in das Erweiterungsmodul integriert ist, oder über einen Kopfhörer, der an das Erweiterungsmodul angeschlossen ist.

In einer Variante können elektrische Signale vom Mobilfunktelefon über die Schnittstelle an den genannten elektroakustischen Wandler geleitet werden. Dies hat den Vorteil, dass über den gleichen elektroakustischen Wandler vom Radioempfänger empfangene Audioprogramme sowie vom Mobilfunktelefon empfangene Telefonate angehört werden können.

In einer Variante umfasst das Erweiterungsmodul mindestens ein Bedienungselement, mittels welchem ein Benutzer ein Signal über die Schnittstelle an das Mobilfunktelefon geben kann. Dies verbessert den Benutzerkomfort, indem zum Beispiel im Mobilfunktelefon Funktionen ausgelöst werden können, ohne dass dieses zur Hand genommen oder geöffnet werden muss, beispielsweise, wenn das Bedienungselement über ein Kabel mit dem Erweiterungsmodul verbunden ist.

In verschiedenen Varianten wird das Erweiterungsmodul über die Schnittstelle vom Mobilfunktelefon oder mittels einer eigenen Batterie gespiesen. Die erste Variante hat den Vorteil, dass das Erweiterungsmodul kleiner dimensioniert werden kann. Die zweite Variante hat den Vorteil, dass das Erweiterungsmodul zur zusätzlichen Speisung des Mobilfunktelefons verwendet werden kann und die meist klein dimensionierte Batterie des Mobilfunktelefons nicht belastet.

Ein Vorteil der Erfindung besteht darin, dass diese angewendet werden kann, ohne dass zwingend Änderungen am bestehenden Mobilfunktelefon erforderlich sind. Das erfindungsgemässe Erweiterungsmodul sowie die entsprechend angepasste Chipkarte können vom Benutzer einfach mit dem Mobilfunktelefon verbunden, respektive in dieses eingeführt werden, womit das Mobilfunktelefon mit mindestens einer kontaktlosen Schnittstelle, sowie, je nach Ausführungsvariante, zusätzlich mit einem Radioempfänger zum Empfang von programmbegleitenden digitalen Daten, ausgerüstet werden kann, ohne das bestehende Mobilfunktelefon ersetzen oder verändern zu müssen.

Nachfolgend wird eine Ausführung der vorliegenden Erfindung anhand eines Beispieles beschrieben. Das Beispiel der Ausführung wird durch die einzige beigelegte Figur illustriert, die
ein schematisches Blockdiagramm zeigt, welches eine externe Vorrichtung, ein Mobilfunktelefon mit Chipkarte, sowie ein damit verbundenes Erweiterungsmodul umfasst.

Die Referenznummer 1 bezieht sich auf ein Erweiterungsmodul, welches über eine externe, elektrische Schnittstelle 3 entfernbar mit einem Mobilfunktelefon 2 verbunden ist, zum Beispiel ein Mobilfunktelefon 2 für ein GSM - oder ein UMTS-Netz. Die elektrische Schnittstelle 3 ist ins Gehäuse des Erweiterungsmoduls 1, respektive ins Gehäuse des Mobilfunktelefons 2 integriert, so dass elektrische Kontakte des Erweiterungsmoduls 1 entfernbar mit elektrischen Kontakten des Mobilfunktelefons 2 verbunden werden können und dass das Erweiterungsmodul 1 und das Mobilfunktelefon 2 im verbundenen Zustand eine handliche Einheit bilden.

Das schematisch dargestellte erfindungsgemässe Erweiterungsmodul 1 umfasst eine kontaktlose Schnittstelle, welche in einer Ausführungsvariante eine elektrische Spule 17 und ein damit verbundenes Elektronikmodul 19 umfasst. Die Spule 17 kann zum Beispiel durch Wickeln eines Drahtes oder durch eine beliebige andere geeignete Technik hergestellt werden. Das Elektronikmodul 19 umfasst einen elektronischen Schaltkreis, der vom Fachmann so konzipiert und realisiert wird, dass er die Daten vom Mobilfunktelefon 2 über die elektrische Schnittstelle 3 empfangen und als entsprechendes analoges oder digitales Signal zur Aussendung mittels elektromagnetischen Wellen an die Spule 17 anlegen kann. In umgekehrter Richtung kann der vom Fachmann entwickelte Schaltkreis die von einem externen magnetischen Feld, welches zum Beispiel von einer externen Vorrichtung 4 abgestrahlt wird, in die elektrische Spule 17 induzierten Signale entgegennehmen und als Daten über die elektrische Schnittstelle 3 ans Mobilfunktelefon 2 weiterleiten. Bekannte Schaltkreise für induktive kontaktlose Schnittstellen werden, unter anderem, schon in Chipkarten verwendet werden und sind unter der Bezeichnung CCI (Contactfree Chipcard Interface) bekannt. Der elektronische Schaltkreis kann beispielsweise als integrierter Schaltkreis im Elektronikmodul 19 implementiert werden. Daten vom Mobilfunktelefon 2 können so ohne Benutzung eines Mobilnetzes direkt über elektromagnetische Wellen, beispielsweise mit einer bei 13.56 MHz liegenden Frequenz, mit einer externen Vorrichtung 4 ausgetauscht werden, welche in symbolischer Weise dargestellt und ebenfalls mit einer elektrischen Spule oder einer Antenne versehen wird. Die maximale Kommunikationsdistanz hängt von den Eigenschaften der Spulen sowie von der Sendeleistung ab, welche derart gewählt wird, dass eine zu starke Beanspruchung der Energiereserven des Mobilfunktelefons 2 vermieden wird. Eine Reichweite von mehreren Metern ist beispielsweise ohne grössere Probleme mittels konventionellen Techniken realisierbar. Es ist wichtig darauf zu achten, dass das Gehäuse des Erweiterungsmoduls 1 an der Stelle, wo sich die Spule 17 befindet nicht elektromagnetisch abgeschirmt ist, damit eine Funkverbindung mit der externen Vorrichtung 4 aufgebaut werden kann.

In einer Variante umfasst die kontaktlose Schnittstelle im Erweiterungsmodul 1 zusätzlich zur elektrischen Spule 17 oder an Stelle der Spule 17 einen handelsüblichen Infrarot-Sender/Empfänger 18 der mit einem Elektronikmodul 19 verbunden ist. Der Infrarot-Sender/Empfänger 18 ist entweder direkt in das Gehäuse des Erweiterungsmoduls integriert oder auf die Oberfläche des Gehäuses aufgesetzt. Das Elektronikmodul 19 umfasst einen elektronischen Schaltkreis, der vom Fachmann so konzipiert und realisiert wird, dass er die Daten vom Mobilfunktelefon 2 über die elektrische Schnittstelle 3 empfangen und als entsprechendes Signal zur Aussendung mittels Infrarotstrahlen an den Infrarot-Sender 18 übertragen kann. In umgekehrter Richtung kann der vom Fachmann entwickelte Schaltkreis die von einer externen Vorrichtung 4 abgestrahlten und vom Infrarot-Empfänger 18 empfangenen Signale entgegennehmen und als Daten über die elektrische Schnittstelle 3 ans Mobilfunktelefon 2 weiterleiten. Der elektronische Schaltkreis kann beispielsweise als integrierter Schaltkreis im Elektronikmodul 19 implementiert werden. Die kontaktlose Infrarot-Kommunikation basiert vorzugsweise auf einem bekannten Standard, zum Beispiel auf dem IrDA-Protokoll (Infrared Data Association).

Falls die kontaktlose Schnittstelle einen Infrarot-Sender/Empfänger 18 und eine elektrische Spule 17 umfasst können die beiden beschriebenen Schaltkreise vom Fachmann kombiniert und zusammen als integrierter Schaltkreis im Elektronikmodul 19 implementiert werden. Auch bei der Ausführungsvariante mit einem Infrarot-Sender/Empfänger 18 hängt die maximale Kommunikationsdistanz von der Sendeleistung ab, welche derart gewählt wird, dass eine zu starke Beanspruchung der Energiereserven das Mobilfunktelefons 2 vermieden wird. Bei einer Ausführung mit bekannten Techniken und Komponenten kann die Kommunikationsdistanz problemlos einige Meter betragen. Allerdings muss bei der Infrarot-Kommunikation die Kommunikationsstrecke zwischen den Infrarot-Sendern/Empfängern des Erweiterungsmoduls 1 und der schematisch dargestellten externen Vorrichtung 4 frei von Hindernissen sein, die von den Infrarotstrahlen nicht passiert werden können.

Gegenwärtig werden von verschiedenen Herstellern Mobilfunktelefone 2 mit unterschiedlichen Schnittstellen 3 angeboten, so dass das Erweiterungsmodul 1 entsprechend an diese unterschiedlichen Schnittstellen 3 angepasst werden muss. Dies kann beispielsweise so erreicht werden, dass verschiedene Varianten von Erweiterungsmodulen 1 gebaut und angeboten werden, die jeweils für ein bestimmtes Mobilfunktelefon 2 mit einer bestimmten Schnittstelle 3 geeignet sind und von einem Fachmann entsprechend konzipiert und entwickelt werden. Aus wirtschaftlichen Gründen wird dies vorteilhafterweise für diejenigen Mobilfunktelefone 2 gemacht, die eine Schnittstelle aufweisen, die zu den auf dem Markt verbreitetsten gehört. Eine andere Möglichkeit besteht darin, dass zur Anpassung an die unterschiedlichen Schnittstellen 3 der verschiedenen Mobilfunktelefone 2 ein Adapter benützt wird, welcher von einem Fachmann entsprechend konzipiert und entwickelt wird und entweder in das Erweiterungsmodul 1 integriert oder als separate Einheit zwischen das Mobilfunktelefon 2 und das Erweiterungsmodul 1 eingefügt wird. Adapter für den Zweck externe Vorrichtungen über die unterschiedlichen Schnittstellen 3 mit einem Mobilfunktelefon 2 zu verbinden sind in der oben erwähnten Patentanmeldung WO 97/33384 beschrieben worden. Für die serielle Datenübertragung über die Schnittstelle 3 ist beispielsweise für Mobilfunktelefone 2 für GSM-Netze vom European Telecommunications Standards Institute (ETSI) ein umfassendes Protokoll definiert worden, welches unter dem Namen "Terminal Equipment to Mobile Station (TE-MS) Multiplexer Protocol (GSM 07.10 Version 2.2.0)' publiziert wurde und beim ETSI Sekretariat, in F-06921 Sophia Antipolis Cedex, erhältlich ist.

Erfindungsgemäss wird das Erweiterungsmodul 1 zusätzlich mit einem dem Fachmann bekannten analogen oder digitalen Radioempfänger 16, beispielsweise ein FM-Empfänger, zum Empfang von Radioprogrammen ausgestattet, welcher insbesondere auch programmbegleitende digitale Daten empfangen kann. Die Übertragung von programmbegleitenden Daten zusätzlich zum Radioprogramm wird vor allem im digitalen Radiosystem DAB (Digital Audio Broadcasting) oder in anderen Radiosystemen wie FM-SWIFT oder FM-DARC verwendet Die DAB-Technologie, zum Beispiel, ermöglicht es, sowohl Radioprogramme als auch programmbegleitende Dienste (Program Associated Data, PAD) zu übertragen. Die Funktion eines Datendecoders kann dabei im genannten Radioempfänger 16 integriert sein. Die empfangenen programmbegleitenden digitalen Daten werden vom Erweiterungsmodul 1 über die Schnittstelle 3 an das Mobilfunktelefon 2 übertragen. In einer Variante wird auch das empfangene Audioprogramm vom Erweiterungsmodul 1 über die Schnittstelle 3 an das Mobilfunktelefon 2 weitergeleitet, wo es beispielsweise auf den ins Mobilfunktelefon 2 integrierten Lautsprecher übertragen wird.

Vorzugsweise verfügt die Chipkarte 21, zum Beispiel eine SIM-Karte, die entfembar mit dem Mobilfunktelefon 2 über eine Standardschnittstelle verbunden ist, über programmierte Softwarefunktionen, mittels welchen die über die beschriebene kontaktiose Schnittstelle empfangenen Daten und, je nach Ausführungsvariante, die erwähnten programmbegleitenden digitalen Daten über die Schnittstelle 3 entgegengenommen werden können. Auf der Chipkarte 21 können beispielsweise auch zusätzliche Softwarefunktionen zur Manipulation der decodierten, programmbegleitenden digitalen Daten implementlert werden.

In der Chipkarte 21 können auch programmierte Softwarefunktionen zur Ausführung des End-to-End-Kommunlkationsprotokolls für die Kommunikation über die beschriebene kontaktiose Schnittstelle mit der externen Vorrichtung 4 implementiert werden. Typischerweise werden solche End-to-End-Kommunikationsprotokolle im Client/Server-Stil mit Request/Response-Sequenzen ausgeführt, wobei, je nach Anwendungsbeispiel, die externe Vorrichtung 4 oder die Chipkarte 21 die Cient- oder die Server-Rolle übernehmen kann. Es ist insbesondere vorteilhaft, dass die Chipkarte 21 mit Softwarefunktionen ausgerüstet ist, um beispielsweise mittels Bedienungselementen 22 des Mobilfunktelefons 2 eingegebene Befehle oder Daten entgegenzunehmen. Entsprechend dieser Befehle können von der Chipkarte 21 vordefinierte Funktionen, die als programmierte Softwarefunktionen implementiert sind, ausgeführt werden und beispielsweise vom Benutzer eingegebene Daten oder auf der Chipkarte 21 abgespeicherte Daten über die elektrische Schnittstelle 3 und über die beschriebene kontaktlose Schnittstelle zur externen Vorrichtung übermittelt werden. Auf diese Art können beispielsweise vom Benutzer eingegebene Passwörter, auf der Chipkarte 21 abgespeicherte Zutrittsschlüssel und/oder biometrische Parameter an externe Zutrittskontrollvorrichtungen 4 zu Gebäuden, Arealen oder Transportmitteln übertragen werden. Andere Anwendungsbeispiele sind die Übertragung und Verrechnung von auf der Chipkarte 21 abgespeicherten vorausbezahlten Geldbeträgen an externe Kassenvorrichtungen 4 in Verkaufsläden oder Restaurants, oder an Geldautomaten 4 bei Benzintankstellen oder in öffentlichen Kommunikationsendgeräten, oder an Billetautomaten 4 usw.

Die Chipkarte 21 kann zusätzlich mit Softwarefunktionen ausgerüstet werden, die auch Fernsteuerungsfunktionen ausführen können, beispielsweise für Geräte der Unterhaltungselektronik, wie Stereogeräte 4 oder Fernsehapparate 4, für Garagetoröffner 4, oder für Sicherheits- und Verriegelungsfunktionen im Auto 4 usw.

In umgekehrter Richtung kann die Chipkarte 21 mit entsprechenden Softwarefunktionen Daten von externen Vorrichtungen 4 über die beschriebene kontaktlose Schnittstelle via die elektrische Schnittstelle 3 entgegennehmen und, je nach Anwendung, gegebenenfalls abspeichern. Auf diese Weise können beispielsweise Geldbeträge (Electronic Cash) von entsprechend ausgerüsteten Bankautomaten (ATM) 4 auf die Chipkarte 21 transferiert und dort abgespeichert werden. Die Anwendungen sind beinahe grenzenlos und nicht auf die hier gegebenen Beispiele begrenzt.

In der Ausführungvariante mit einer kontaktlosen Schnittstelle, welche eine elektrische Spule 17 und einen Infrarot-Sender/Empfänger 18 umfasst, sind die Einsatzmöglichkeiten offensichtlich grösser weil verschiedene externe Vorrichtungen mit entsprechend unterschiedlichen kontaktlosen Schnittstellen als Kommunikationspartner in Frage kommen. Zusätzlich ist es auch möglich die Chipkarte 21 derart mit Softwarefunktionen zu programmieren, dass nicht nur unterschiedliche kontaktlose Schnittstellen, sondern auch unterschiedliche Protokolle erkannt und ausgeführt werden können. Entsprechende Softwarefunktionen, die Protokolle von verschiedenen oder spezifischen Herstellern unterstützen, können von diesbezüglichen Dienstleistungsanbietern, beispielsweise gegen Bezahlung, auf die Chipkarte 21 geladen werden.

Insbesondere für die Variante mit dem in das Erweiterungsmodul 1 integrierten Radioempfänger 16, verfügt das Erweiterungsmodul 1 zudem vorteilhafterweise über mindestens einen elektroakustischen Wandler 11, 15, beispielsweise ein Lautsprecher 15, der in bekannter Weise direkt in das Erweiterungsmodul 1 eingebaut ist. In einer anderen Variante verfügt er zudem, oder an dessen Stelle, über einen Kopfhörer 11, der mit einem Kabel 13 an das Erweiterungsmodul 1 angeschlossen ist, über eine fest verbundene oder entfernbare Verbindung 14, beispielsweise eine handelsübliche Kopfhörerbuchse 14. In der entfernbaren Variante, kann der Lautsprecher, falls vorhanden, durch anschliessen des Kopfhörers automatisch ausgeschaltet werden. Für zusätzlichen Benutzerkomfort kann der Kopfhörer zudem mit einem Bedienungselement 12 versehen werden, welches zum Beispiel zur Einstellung der Lautstärke und zum Abstimmen der Empfangsfrequenz dient. Zusätzlich oder an Stelle dieses Bedienungselementes 12 können entsprechende Bedienungselemente ins Gehäuse des Erweiterungsmoduls 1 integriert werden.

Die Antenne des Radioempfängers 16 im Erweiterungsmodul 1 ist beispielsweise mittels dem Kabel 13 des Kopfhörers realisiert oder innerhalb des Gehäuses des Erweiterungsmoduls 1 durch dem Fachmann bekannte Mittel implementiert.

In einer Ausführungsvariante können elektrische Signale vom Mobilfunktelefon 2 über die Schnittstelle 3 an den genannten elektroakustischen Wandler 11, 15 geleitet werden. Dies hat den Vorteil, dass ankommende Telefongespräche zum Beispiel auf den Kopfhörer übertragen werden können, wenn der Benutzer mit diesem ein Radioprogramm anhört. Es kann von Vorteil sein, wenn der Benutzer den Radioempfänger 16 als Signalquelle für den elektroakustischen Wandler 11, 15 wahlweise ausschalten kann, so dass er ein ankommendes Telefongespräch ungestört, beispielsweise über den Kopfhörer, anhören kann. Ein solcher Wählschalter kann zum Beispiel in das Bedienungselement 12 integriert werden, was eine zusätzliche Leitung auf dem Kabel 13 und der Anschlussbuchse 14 benötigt, oder er kann in das Erweiterungsmodul 1 integriert werden. Im letzteren Fall kann der Wählschalter auch dazu benutzt werden bei Bedarf den Lautsprecher 15 des Erweiterungsmoduls 1 auszuschalten, falls ein solcher vorhanden ist. Die vom Mobilfunktelefon 2 über die Schnittstelle 3 an den genannten elektroakustischen Wandler 11, 15 geleiteten elektrischen Signale können ohne Änderungen des Mobilfunktelefon 2 an der Schnittstelle 3 verfügbar sein. Es kann aber auch vorteilhaft sein, dass die Chipkarte 21 mit Softwarefunktionen programmiert wird, die erlauben elektrische Signale über die Schnittstelle 3 an den elektroakustischen Wandler 11, 15 zu leiten.

In einer Variante ist es möglich mittels einem Signalgeber vom Erweiterungsmodul 1 ein elektrisches Signal über die Schnittstelle 3 an das Mobilfunktelefon 2 zu übertragen. Der Signalgeber kann beispielsweise ein Schaltknopf sein, der zum Beispiel in das Bedienungselement 12 integriert ist, was eine zusätzliche Leitung auf dem Kabel 13 und der Anschlussbuchse 14 benötigt, oder er kann in das Erweiterungsmodul 1 integriert werden. Durch einen entsprechenden programmierten Softwareprozess in der Chipkarte 21 kann ein solches Signal von der Chipkarte 21 entgegengenommen werden und als Startsignal für vordefinierte Verfahrensschritte, das heisst vordefinierte Softwarefunktionen, verwendet werden. Ein gleichwertiges Startsignal kann zum Beispiel vom Benutzer auch mittels der Bedienungselemente 22 des Mobilfunktelefons 2, zum Beispiel mittels einer bestimmten vordefinierten Taste eingegeben und von der erwähnten Soflwarefunktion entgegengenommen werden.

In einer weiteren Ausführungsvariante können auch mehrere Signalgeber vorgesehen werden, die beispielsweise unterschiedlich geformt oder gekennzeichnet sein können und die verschiedene elektrische Signale vom Erweiterungsmodul 1 über die Schnittstelle 3 an das Mobilfunktelefon 2 senden können. Entsprechend den verschiedenen Signalen kann der empfangende programmierte Softwareprozess in der Chipkarte 21 verschiedene vordefinierte Softwarefunktionen aufstarten.

Ein konkretes Beispiel für eine Softwarefunktion, die vorteilhafterweise vom Bedienungselement 12 gestartet wird, ist das Beantworten eines ankommenden Telefonanrufes, wenn der Benutzer den Kopfhörer benutzt um Radioprogramme und gleichzeitig auch Telefonate zu hören. Der Softwareprozess, der das Startsignal vom Signalgeber entgegennimmt, kann so programmiert werden, dass er das ankommende Telefongespräch beantwortet, das heisst entgegennimmt, und das Telefongespräch über den Kopfhörer hörbar macht, wenn das Bedienungselement 12 betätigt wird während ein Telefonanruf ankommt.

Ein Startsignal kann zudem beispielsweise in der Chipkarte 21 einen Softwareprozess auslösen, der die vom Radioempfänger 16 zuletzt empfangenen programmbegleitenden digitalen Daten entgegennimmt und entsprechend und/oder in Abhängigkeit der Datenwerte eine Kurzmeldung abfasst und diese mittels der Kommunikationsfunktionen des Mobilfunktelefons 2 an ein Dienstleistungszentrum übermittelt. Je nach Ausführung kann das Erweiterungsmodul 1 mit Speichermitteln ausgerüstet werden um empfangene Daten beispielsweise für eine gewisse Zeit zwischenzuspeichern. In einer Variante werden die vom Radioempfänger 16 empfangenen programmbegleitenden digitalen Daten von einem entsprechend programmierten Softwareprozess in der Chipkarte 21 laufend entgegengenommen, so dass sich der entsprechende, oben beschriebene Schritt erübrigt. Die empfangenen programmbegleitenden digitalen Daten enthalten zum Beispiel eine Identifikation von Produkten oder Dienstleistungen, z. B. die Belieferung mit bestimmten Informationen, sowie die Identifikation eines Dienstleistungszentrum, welches Bestellungen für diese Produkt entgegennimmt. Die empfangenen Daten begleiten beispielsweise ein Audioprogramm, in welchem ein Kommentator die Zuhörer auffordert den Signalgeber zu betätigen, falls sie ein bestimmtes Produkt, weiches zum Beispiel gerade in einer Werbung vorgestellt wurde, bestellen möchten. Um einer irrtümlichen Eingabe einer Bestellung vorzubeugen können natürlich zusätzliche Bestätigungsschritte eingebaut werden, auf die hier nicht näher eingegangen werden soll. Das Mobilfunktelefon 2 kann beispielsweise ein GSM- oder ein UMTS-Gerät sein, über welches der Softwareprozess in der Chipkarte 21 die Produktebestellung beispielsweise in Kurzmeldungen, zum Beispiel SMS Kurzmeidungen, USSD Daten oder andere Datagramme, über ein Mobilnetz, zum Beispiel ein GSM- oder UMTS-Netz, an das Dienstleistungszentrum übermittelt. Die Übermittlung und Behandlung der Daten in Kurzmeldungen an das und im Dienstleistungszentrum erfolgt beispielsweise gemäss dem SICAP Verfahren, welches unter anderem in EP 689 368 beschriebenen worden ist, gemäss einem ähnlichen Verfahren oder basierend auf WAP (Wireless Application Protocol). Ein Bestellverfahren für Produkte oder Informationen für ein Mobilfunktelefon 2, welches beispielsweise hier angewendet werden kann, wird in der Patentanmeldung PCT/CH96/00464 (WO 98/28900) beschrieben.

Es kann auch vorgesehen sein, dass der Softwareprozess jeweils automatisch durch den Empfang von programmbegleitenden digitalen Daten oder Daten der externen Vorrichtung 4, oder einem darin enthaltenen speziellen Code gestartet wird, Es kann auch möglich sein ein solches automatisches Aufstarten des Softwareprozesses durch den Benutzer als Optionsparameter setzen zu lassen, beispielsweise durch Entgegennahme eines entsprechenden Befehls über eine Softwarefunktion und durch Abspeichern des eingegebenen Optionsparameters in der Chipkarte 21

In einer Variante werden die über die kontaktlose Schnittstelle empfangenen Daten und, je nach Ausführung, die programmbegleitenden digitalen Daten, welche vom in der Chipkarte 21 aufgestarteten oder einem laufenden Softwareprozess entgegengenommen wurden, zunächst auf dem Display 23 des Mobilfunktelefons 2 dargestellt. Dabei kann es sich um ganze Datensätze handeln, welche beispielsweise vom Benutzer mittels der Bedienungselemente 22 des Mobilfunktelefons 2 selektiert und durchgeblättert werden können. Dies wird durch entsprechende programmierte Funktionen des Softwareprozesses in der Chipkarte 21 erreicht, welche die Datendarstellung sowie die Entgegennahme der mittels Bedienungselemente 22 eingegebenen Befehle steuern und entsprechend den eingegebenen Befehlen vordefinierte programmierte Funktionen ausführen. Dabei können bestimmte Tasten der Bedienungselemente 22 und/oder 12 als Funktionstasten definiert werden und/oder durch Navigation mittels Cursortasten bestimmte Optionen aus Menus gewählt werden. Die Anwendungsmöglichkeiten sind nahezu unbegrenzt, vor allem auch deshalb weil nicht nur vordefinierte programmierte Funktionen ausgeführt werden können, sondern weil die empfangenen und vom Softwareprozess der Chipkarte 21 entgegengenommenen Daten, insbesondere die programmbegleitenden digitalen Daten, auch ausführbare Programme enthalten können, zum Beispiel Java Applets, welche auf der Chipkarte 21 ausgeführt werden können. Die durch die vordefinierten Funktionen selektierten Daten und/oder Resultate von ausgeführten vordefinierten Funktionen oder empfangenen Programmen können, wie oben beschrieben, beispielsweise mittels Kurzmeldungen, zum Beispiel SMS Kurzmeldungen, USSD Daten oder andere Datagramme, über ein Mobilnetz, zum Beispiel ein GSM- oder UMTS-Netz, an Dienstleistungszentren übermittelt werden. Wie oben beschrieben erfolgt die Übermittlung und Behandlung der Daten in Kurzmeldungen an das und im Dienstleistungszentrum beispielsweise gemäss dem SICAP Verfahren, welches unter anderem in EP 689 368 beschriebenen worden ist, gemäss einem ähnlichen Verfahren oder basierend auf WAP (Wireless Application Protocol). Wenn der Fachmann Änderungen am Mobilfunktelefon 2 vornehmen möchte, kann er beispielsweise auch entscheiden gewisse Softwarefunktionen anstatt auf der Chipkarte 21 im Mobilfunktelefon 2 zu implementieren und/oder auszuführen, allerdings bleibt die Chipkarte 21 das steuernde und/oder auslösende Element und hat gegebenenfalls bezüglich im Mobilfunktelefon 2 implementierten und/oder ausgeführten Softwarefunktionen eine Master-Funktion. Auch im Dienstleistungszentrum sind die Anwendungsmöglichkeiten natürlich unbegrenzt, beispielsweise können die empfangenen Daten abgespeichert, gesammelt und an eine interessierte Partei weitergeleitet oder verkauft werden. Im Fall der programmbegleitenden digitalen Daten ist die eigentliche Anwendung zum Beispiel ein Spiel, ein Wettbewerb oder eine Meinungsumfrage. Natürlich kann es sich, wie schon oben erwähnt, um Produkte- oder Dienstleistungsbestellungen handeln, wobei das Dienstleistungszentrum die eingegangenen Bestellungen oder Anmeldungen vorteilhafterweise nochmals vom Benutzer bestätigen lässt und eine bestätigte Bestellung oder Anmeldung ausführt oder an ein weiteres zuständiges Dienstleistungszentrum weiterleitet. Wie bereits erwähnt ist ein Bestellverfahren für Produkte oder Informationen für ein Mobilfunktelefon 2, welches beispielsweise hier angewendet werden kann, in der Patentanmeldung PCT/CH96/00464 (WO 98/28900) beschrieben. Im Fall der über die kontaktlose Schnittstelle von einer externen Vorrichtung 4 empfangenen Daten kann es sich bei der Anwendung zum Beispiel darum handeln, dass von der externen Vorrichtung 4 die Eingabe und Übermittlung von Informationen verlangt werden, die nicht auf der Chipkarte 21 gespeichert sind und die zuerst mittels Kurzmeldungen über ein Mobilnetz von einem Dienstleistungszentrum angefordert werden müssen, dabei kann es sich beispielsweise um einen signierten Nachweis der Kreditwürdigkeit handeln.

Um gegebenenfalls empfangene Daten zu entschlüsseln und um zu sendende Daten zu verschlüsseln und zu signieren wird die Chipkarte 21 zusätzlich mit entsprechenden programmierten Softwarefunktionen ausgestattet. Als Verschlüsselungsverfahren kann beispielsweise das TTP-Verfahren (Trusted Third Party) oder ein PTP-Verfahren (Point-to-Point) eingesetzt werden. Für die Verschlüsselung des Datenaustausches über die kontaktlose Schnittstelle, zwischen dem Erweiterungsmodul 1 und der extemen Vorrichtung 4, kann aber auch ein DEA, DES, TDES, RSA oder ECC-Sicherheitsalgorithmus verwendet werden.

Zur Identifizierung und Authentifizierung des Benutzers kann eine auf der Chipkarte 21 gespeicherte IMSI (International Mobile Subscriber Identification) oder eine IDUI (International Debit User Identification) verwendet werden, welche beispielsweise über die kontaktiose Schnittstelle an die externe Vorrichtung 4 übertragen werden, wobei für die Authentifizierung das oben erwähnte TTP-Verfahren oder ein ähnliches Verfahren verwendet werden kann.

In verschiedenen Varianten kann das Erweiterungsmodul 1 über die Schnittstelle 3 direkt vom Mobilfunktelefon 2 gespiesen werden oder es kann mit einer eigenen, eventuell aufladbaren, Batteriespelsung versehen werden. Erstere Variante ermöglicht es das Erweiterungsmodul 1 klein zu dimensionieren, hat aber den Nachteil, dass dadurch die Batterien des Mobilfunktelefons 2 zusätzlich belastet werden. Die letztere Variante hat natürlich den Vorteil, dass das Erweiterungsmodul 1 auch als zusätzliche Energiequelle für das Mobilfunktelefon 2 dienen kann.

Obwohl dies bis anhin nicht erwähnt wurde ist es auch möglich anstelle von, oder zusätzlich zum Radioempfänger 16 einen Tuner für Fernsehsignale im Erweiterungsmodul 1 zu integrieren, wobei auch ein kleines Video Display, wie es bereits aus mobilen Videotelefonen bekannt ist, in das Erweiterungsmodul integriert oder ein bereits im Mobilfunktelefon 2 vorhandenes Videodisplay zur Darstellung des Videosignales benutzt werden kann. Programmbegleitende digitale Daten, zum Beispiel der bekannte Teletext, werden nämlich auch Fernsehprogrammen hinzugefügt, beispielsweise werden solche Daten während des vertikalen Rasterintervalls übertragen und können vom Tuner empfangen und mit entsprechenden Decoderfunktionen decodiert werden.

Wie bereits erwähnt sind die Anwendungsmöglichkeiten der beschriebenen Erfindung fast grenzenlos und keinesfalls nur auf die gegebenen Beispiele limitiert. Insbesondere ist es auch möglich die beschriebenen Kommunikationswege, das heisst Empfang von programmbegleitenden digitalen Daten, Senden und Empfangen von Daten über eine elektrische Spule 17 und/oder einen Infrarot-Sender/Empfänger 18, sowie Senden und Empfangen von Daten in Kurzmeldungen über ein Mobilnetz, in geeigneten Anwendungen mittels des Erweiterungsmoduls 1 und mit entsprechenden programmierten Softwarefunktionen in der Chipkarte 21 miteinander zu kombinieren. Zum Beispiel kann in einem Radioprogramm Werbung für eine Veranstaltung, beispielsweise eine Sportveranstaltung oder eine Ausstellung, gemacht werden und der Benutzer kann anhand der empfangenen programmbegleitenden digitalen Daten mittels dem Signalgeber automatisch eine entsprechende Bestellung, für ein oder mehrere Zutrittstickets, in Kurzmeldungen über ein Mobilnetz aufgeben, welches er mittels einem auf der Chipkarte 21 gespeicherten vorausbezahlten Geldbetrag auch gleichzeitig bezahlen lassen kann. Als Gegenleistung wird ihm entweder über das Mobilnetz oder mittels programmbegleitenden Daten ein Zutrittsschlüssel für eine oder mehrere Personen übermittelt und auf die Chipkarte 21 geladen. Beim Besuch der Veranstaltung wird dann der Zutrittsschlüssel über die kontaktlose Schnittstelle an eine externe Vorrichtung 4, in diesem Falle eine Zutrittskontrolle, übermittelt und ihm entsprechend der Zugang gewährt.

Obwohl nur beschrieben wurde, dass das Erweiterungsmodul 1 über eine externe elektrische Schnittstelle 3 entfernbar mit dem Mobilfunktelefon 2 verbunden wird, könnte die externe Schnittstelle 3, insbesondere für den Transfer der beschriebenen Daten, durchaus als elektromagnetische Schnittstelle, als Infrarotschnittstelle oder mittels Optokoppler realisiert werden, solange sichergestellt wird, dass damit die Funktion der beschriebenen kontaktlosen Schnittstelle für die Kommunikation mit einer externen Vorrichtung 4 nicht beeinträchtigt wird.

Es ist auch möglich das Erweiterungsmodul 1 weiter auszubauen und nicht bloss einen Kopfhörer sondern gleich auch ein Mikrofon miteinzubeziehen, so dass mittels einem handelsüblichen Kopfhörer-Mikrofonset bequem Radioprogramme gehört und auch ankommende Telefonate erledigt werden können, ohne das Mobilfunktelefon zur Hand nehmen zu müssen.

Um die Ausbaufähigkeit und die Einsatzmöglichkeiten des Mobilfunktelefons 2 nicht zu beeinträchtigen kann das Erweiterungsmodul 1 in einer Variante seinerseits mit einer externen, ins Gehäuse des Erweiterungsmoduls 1 integrierten, elektrischen Schnittstelle 3' ausgerüstet werden, welche der elektrischen Schnittstelle 3 des Mobilfunktelefons 2 entspricht und mit dieser verbunden ist, wenn das Erweiterungsmodul 1 über die elektrische Schnittstelle 3 an das Mobilfunktelefon 2 angeschlossen ist. Dies hat den Vorteil, dass zusätzliche andere Erweiterungsmodule oder Adapter über diese zusätzliche elektrische Schnittstelle 3' mit dem Mobilfunktelefon 2 verbunden werden können, auch wenn das beschriebene Erweiterungsmodul 1 bereits über die elektrische Schnittstelle 3 an das Mobilfunktelefon 2 angeschlossen ist.

Neben dem Erweiterungsmodul 1 kann einem interessierten Benutzer auch eine Chipkarte 21 mit der beschriebenen Software verkauft werden oder es kann ihm ein entsprechendes Softwaremodul auf seine Chipkarte 21 geladen werden.

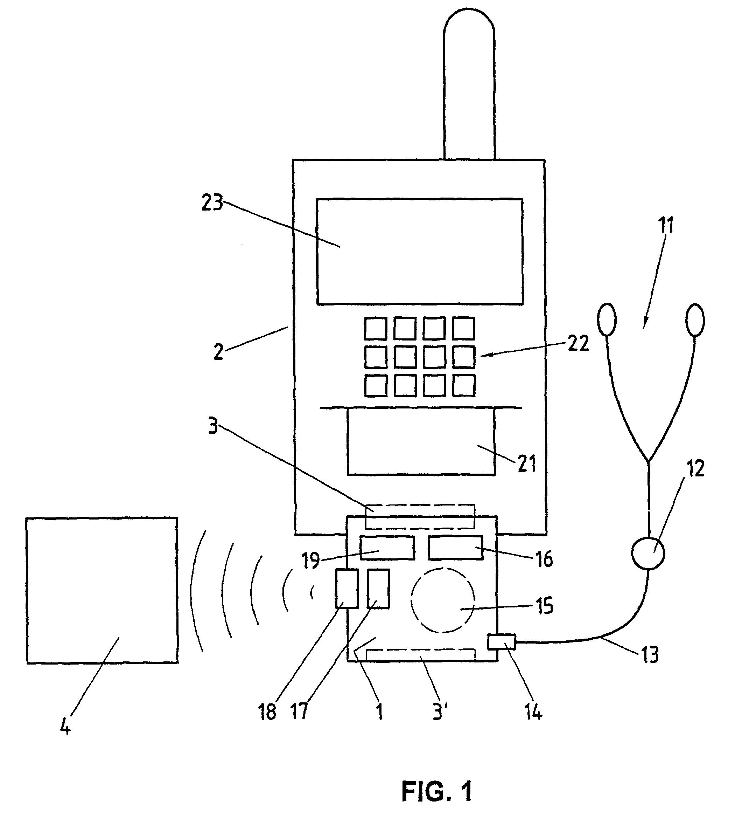

## Patentansprüche

1. Erweiterungsmodul (1) für Mobilfunktelefone (2), welches mit einem genannten Mobilfunktelefon (2) entfernbar über eine externe, ins Gehäuse des Erweiterungsmoduls (1), respektive ins Gehäuse des genannten Mobilfunktelefons (2) integrierte, elektrische Schnittstelle (3) verbindbar ist und welches Erweiterungsmodul (1) mindestens eine kontaktlose Schnittstelle umfasst, mittels welcher Daten vom Mobilfunktelefon (2), die über die genannte elektrische Schnittstelle (3) ins Erweiterungsmodul (1) geleitet werden, auf eine sich ausserhalb des genannten Mobilfunktelefons (2) befindende externe Vorrichtung (4) übermittelbar sind, und mittels welcher von der genannten externen Vorrichtung (4) ausgesandte Daten empfangen und über die genannte elektrische Schnittstelle (3) ans genannte Mobilfunktelefon (2) leitbar sind, **dadurch gekennzeichnet,**
**dass** das Erwelterungsmodul (1) zusätzlich einen Radioempfänger (16) zum Empfang von Radioprogrammen mit programmbegleitenden digitalen Daten umfasst, und dass diese vom genannten Radioempfänger (16) empfangenen Daten über die genannte elektrische Schnittstelle (3) an das genannte Mobilfunktelefon (2) leitbar sind.

2. Erweiterungsmodul (1) gemäss vorhergehendern Anspruch, **dadurch gekennzeichnet, dass** die genannte kontaktlose Schnittstelle mindestens eine Spule (17) und ein damit verbundenes Elektronikmodul (19) umfasst, mittels welchen Daten in Form von elektromagnetischen Wellen an die genannte externe Vorrichtung (4) übermittelbar sind, und mittels welchen von dieser genannten externen Vorrichtung (4) in dieser Form ausgesandte Daten empfangbar sind.

3. Erweiterungsmodul (1) gemäss einem der vorhergehenden Ansprüche, **dadurch gekennzeichnet, dass** die genannte kontaktlose Schnittstelle mindestens einen Infrarot-Sender/Empfänger (18) und ein damit verbundenes Elektronikmodul (19) umfasst, mittels welchen Daten in Form von Infrarotstrahlen an die genannte externe Vorrichtung (4) übermittelbar sind, und mittels welchen von dieser genannten externen Vorrichtung (4) in dieser Form ausgesandte Daten empfangbar sind.

4. Erweiterungsmodul (1) gemäss einem der vorhergehenden Ansprüche, **dadurch gekennzeichnet, dass** die Daten, die über die genannte elektrische Schnittstelle (3) ans genannte Mobilfunktelefon (2) geleitet werden, an eine mit dem genannten Mobilfunktelefon (2) entfernbar verbundene Chipkarte (21) weiterleitbar sind.

5. Erweiterungsmodul (1) gemäss einem der vorhergehenden Ansprüche, **dadurch gekennzeichnet, dass** es mindestens einen elektroakustischen Wandler (11, 15) umfasst, der mit dem genannten Radioempfänger (16) verbunden ist

6. Erweiterungsmodul (1) gemäss dem vorhergehenden Anspruch, **dadurch gekennzeichnet, dass** elektrische Signale vom genannten Mobilfunktelefon (2) über die genannte elektrische Schnittstelle (3) an den genannten mihdestens einen elektroakustischen Wandler (11, 15) leitbar sind.

7. Erweiterungsmodul (1) gemäss einem der vorhergehenden Ansprüche, **dadurch gekennzeichnet, dass** es mindestens ein Bedienungselement (12) umfasst, mittels welchem ein Benutzer ein Signal über die genannte elektrische Schnittstelle (3) an das genannte Mobilfunktelefon (2) geben kann.

8. Erweiterungsmodul (1) gemäss einem der vorhergehenden Ansprüche, **dadurch gekennzeichnet, dass** es über die genannte elektrische Schnittstelle (3) vom genannten Mobilfunktelefon (2) gespiesen wird.

9. Erweiterungsmodul (1) gemäss einem der Ansprüche 1 bis 7, **dadurch gekennzeichnet, dass** es eine eigene Batteriespeisung umfasst.

10. Erweiterungsmodul (1) gemäss einem der vorhergehenden Ansprüche, **dadurch gekennzeichnet, dass** es zusätzlich über eine externe, ins Gehäuse des Erweiterungsmoduls (1) integrierte, elektrische Schnittstelle (3') verfügt, welche der ins Gehäuse des genannten Mobilfunktelefons (2) integrierten, elektrischen Schnittstelle (3) entspricht und mit dieser verbunden ist, wenn das Erweiterungsmodul (1) über die genannte elektrische Schnittstelle (3) mit dem genannten Mobilfunktelefon (2) verbunden ist.

11. Verfahren für den Empfang und die Behandlung von Daten, in welchem Verfahren die genannten Daten über eine externe, ins Gehäuse eines Erweiterungsmoduls (1), respektive ins Gehäuse eines Mobilfunktelefons (2) integrierte, elektrische Schnittstelle (3), mit welcher das genannte Erweiterungsmodul (1) entfembar mit dem genannten Mobilfunktelefon (2) verbunden ist, aus dem genannten Erweiterungsmodul (1) ins genannte Mobilfunktelefon (2) entgegengenommen werden, **dadurch gekennzeichnet,**
**dass** mindestens gewisse der genannten Daten programmbegleitende digitale Daten aus Radioprogrammen sind, die von einem Radioempfänger (16) im genannten Erweiterungsmoduf (1) empfangen werden.

12. Verfahren gemäss Anspruch 11, **dadurch gekennzeichnet, dass** die entgegengenommenen genannten Daten mittels Bedienungselementen (12, 22) selektiert und durch vordefinierte Funktionen weiterbehandelt werden.

13. Verfahren gemäss einem der Ansprüche 11 bis 12, **dadurch gekennzeichnet, dass** die entgegengenommenen genannten Daten auf einem Display (23) des genannten Mobilfunktelefons (2) dargestellt werden.

14. Verfahren gemäss vorhergehendem Anspruch, **dadurch gekennzeichnet, dass** die dargestellten genannten Daten mit Manipulationen, die mittels Bedienungselementen (22) des genannten Mobilfunktelefons (2) gewählt werden, durchgeblättert werden.

15. Verfahren gemäss einem der Ansprüche 12 bis 14, **dadurch gekennzeichnet, dass** Daten in Abhängigkeit von selektierten genannten Daten über die genannte elektrische Schnittstelle (3) an eine kontaktlose Schnittstelle des Erweiterungsmoduls (1) zur Übermittlung an eine externe Vorrichtung (4) geleitet werden.

16. Verfahren gemäss einem der Ansprüche 12 bis 15, **dadurch gekennzeichnet, dass** Daten in Abhängigkeit von selektierten genannten Daten mittels Kurzmeldungen über ein Mobilnetz an ein Dienstleistungszentrum übermittelt werden.

17. Verfahren gemäss einem der Ansprüche 11 bis 16, **dadurch gekennzeichnet, dass** es mittels Bedienungseiementen (22) des genannten Mobilfunktelefons (2) gestartet wird.

18. Verfahren gemäss einem der Ansprüche 11 bis 17, **dadurch gekennzeichnet, dass** es mittels einem Signal gestartet wird, welches über die genannte elektrische Schnittstelle (3) empfangen wird.

## Claims

1. Extension module (1) for mobile radio telephones (2), which is removably connectible to a said mobile radio telephone (2) via an external electrical interface (3) integrated into the housing of the extension module (1), or respectively into the housing of the said mobile radio telephone (2), and which extension module (1) comprises at least one contactless interface by means of which data from the mobile radio telephone (2), which are conducted into the extension module (1) via the said electrical interface (3), are transmittable to an external device (4) located outside the said mobile radio telephone (2), and by means of which data transmitted by the said external device (4) are received and are conductible via the said electrical interface (3) to the said mobile radio telephone (2), **characterised in that**
the extension module (1) further comprises a radio receiver (16) to receive radio programs with program-accompanying digital data, and **in that** these data received by the said receiver (16) are conductible via the said electrical interface (3) to the said mobile radio telephone (2).

2. Extension module (1) according to the preceding claim, **characterised in that** said contactless interface comprises at least a coil (17) and an electronic module (19) connected thereto, by means of which data are transmittable to the said external device (4) in the form of electromagnetic waves, and by means of which data transmitted in this form by this said external device (4) are receivable.

3. Extension module (1) according to one of the preceding claims, **characterised in that** the said contactless interface comprises at least an infrared transceiver (18) and an electronic module (19) connected thereto, by means of which data are transmittable to the said external device (4) in the form of infrared rays, and by means of which data transmitted in this form by this said external device (4) are receivable.

4. Extension module (1) according to one of the preceding claims, **characterised in that** the data which are conducted to the said mobile radio telephone (2) via the said electrical interface (3) are able to be passed on to a chipcard (21) removably connected to the said mobile radio telephone (2).

5. Extension module (1) according to one of the preceding claims, **characterised in that** it comprises at least one electroacoustic converter (11, 15) which is connected to the said radio receiver (16).

6. Extension module (1) according to the preceding claim, **characterised in that** electrical signals are conductible from the said mobile radio telephone (2) via the said electrical interface (3) to the said at least one electroacoustic converter (11, 15).

7. Extension module (1) according to one of the preceding claims, **characterised in that** it comprises at least one operating element (12) by means of which a user can send a signal through the said electrical interface (3) to the said mobile radio telephone (2).

8. Extension module (1) according to one of the preceding claims, **characterised in that** it is supplied with energy by the said mobile radio telephone (2) via the said electrical interface (3).

9. Extension module (1) according to one of the claims 1 to 7, **characterised in that** it includes its own battery supply.

10. Extension module (1) according to one of the preceding claims, **characterised in that** it further comprises an external, electrical interface (3') integrated into the housing of the extension module (1), which interface corresponds to the electrical interface (3) integrated into the housing of the said mobile radio telephone (2), and is connected thereto when the extension module (1) is connected to the said mobile radio telephone (2) via the said electrical interface (3).

11. Method for receiving and processing data, in which method the said data are received in a mobile radio telephone (2) from an extension module (1) via an external electrical interface (3) integrated into the housing of an extension module (1), respectively in the housing of a mobile radio telephone (2), by means of which interface (3) the said extension module (1) is removably connected to the said mobile radio telephone (2), **characterised in that**
at least certain of the said data are program-accompanying digital data from radio programs which are received by a radio receiver (16) in the said extension module (1).

12. Method according to claim 11, **characterised in that** the received said data are selected by means of operating elements (12, 22) and are further processed through predefined functions.

13. Method according to one of the claims 11 to 12, **characterised in that** the received said data are shown on a display (23) of the said mobile radio telephone (2).

14. Method according to the preceding claim, **characterised in that** the displayed said data are browsed through with manipulations which are selected by means of operating elements (22) of the said mobile radio telephone (2).

15. Method according to one of the claims 12 to 14, **characterised in that** data dependent on selected said data are conducted via the said electrical interface (3) to a contactless interface of the extension module (1) for transmission to an external device (4).

16. Method according to one of the claims 12 to 15, **characterised in that** data dependent on selected said data are transmitted to a service centre by means of short messages over a mobile network.

17. Method according to one of the claims 11 to 16, **characterised in that** it is started by means of operating elements (22) of the said mobile radio telephone (2).

18. Method according to one of the claims 11 to 17, **characterised in that** it is started by means of a signal which is received via the said electrical interface (3).

## Revendications

1. Module d'extension (1) pour téléphones mobiles (2), qui peut être relié à un téléphone mobile (2), de façon séparable, par une interface (3) électrique extérieure, intégrée dans le boîtier du module d'extension (1) ou dans celui du téléphone mobile (2), ce module d'extension (1) possédant au moins une interface sans contact au moyen de laquelle des données en provenance du téléphone mobile (2), et qui sont amenées dans le module d'extension (1) en passant par l'interface électrique (3), peuvent être transmises à un dispositif extérieur (4) se trouvant en dehors du téléphone mobile (2), et interface au moyen de laquelle des données envoyées par le dispositif extérieur (4) sont reçues et peuvent être amenées au téléphone mobile (2) en passant par l'interface électrique (3), **caractérisé en ce**
**que** le module d'extension (1) comprend en outre un récepteur radiophonique (16) destiné à recevoir des programmes radiophoniques accompagnés de données numériques, et en ce que ces données reçues par le récepteur radiophonique (16) peuvent être amenées au téléphone mobile (2) par l'intermédiaire de l'interface électrique (3).

2. Module d'extension (1) selon la revendication précédente, **caractérisé en ce que** l'interface sans contact comprend au moins une bobine (17) et un module électronique (19) qui lui est relié, au moyen desquels des données peuvent être transmises au dispositif extérieur (4) sous forme d'ondes électromagnétiques, et au moyen desquels peuvent être reçues des données envoyées sous cette forme par ce dispositif extérieur (4).

3. Module d'extension (1) selon l'une des revendications précédentes, **caractérisé en ce que** l'interface sans contact comprend au moins un émetteur-récepteur à infrarouge (18) et un module électronique (19) qui lui est relié, au moyen desquels desquels des données peuvent être transmises au dispositif extérieur (4) sous forme de rayons infrarouges, et au moyen desquels peuvent être reçues des données envoyées sous cette forme par ce dispositif extérieur (4).

4. Module d'extension (1) selon l'une des revendications précédentes, **caractérisé en ce que** les données qui sont amenées au téléphone mobile (2) en passant par l'interface électrique (3) peuvent être transmises à une carte à puce (21) reliée de manière séparable au téléphone mobile (2).

5. Module d'extension (1) selon l'une des revendications précédentes, **caractérisé en ce qu'**il comprend au moins un convertisseur électroacoustique (11, 15) qui est relié au récepteur radiophonique (16).

6. Module d'extension (1) selon la revendication précédente, **caractérisé en ce que** des signaux électriques peuvent être amenés du téléphone mobile (2) au convertisseur, ou aux convertisseurs, électroacoustiques (11, 15), en passant par l'interface électrique (3).

7. Module d'extension (1) selon l'une des revendications précédentes, **caractérisé en ce qu'**il comprend au moins un élément de commande (12) au moyen duquel un utilisateur peut envoyer un signal au téléphone mobile (2) en passant par l'interface électrique (3).

8. Module d'extension (1) selon l'une des revendications précédentes, **caractérisé en ce qu'**il est alimenté par le téléphone mobile (2) par l'intermédiaire de l'interface électrique (3) .

9. Module d'extension (1) selon l'une des revendications 1 à 7, **caractérisé en ce qu'**il comprend sa propre alimentation par piles ou accumulateur(s).

10. Module d'extension (1) selon l'une des revendications précédentes, **caractérisé en ce qu'**il possède en plus une interface électrique extérieure (3') intégrée au boîtier du module d'extension (1), qui correspond à l'interface électrique (3) intégrée au boîtier du téléphone mobile (2) et qui lui est reliée quand le module d'extension (1) est relié au téléphone mobile (2) par l'intermédiaire de l'interface électrique (3).

11. Procédé de réception et de traitement de données, avec lequel ces données sont reçues, en provenance du module d'extension (1), dans le téléphone mobile (2), par l'intermédiaire d'une interface électrique (3) extérieure intégrée au boîtier d'un module d'extension (1) ou d'un téléphone mobile (2) et avec laquelle ce module d'extension (1) est relié de manière séparable au téléphone mobile (2), **caractérisé en ce qu'**au moins certaines des données mentionnées sont des données numériques d'accompagnement de programmes, provenant de programmes radiophoniques, qui sont reçues par un récepteur de radio (16) se trouvant dans le module d'extension (1).

12. Procédé selon la revendication 11, **caractérisé en ce que** les données reçues sont choisies au moyen d'éléments de commande (12, 22) et traitées par des fonctions définies à l'avance.

13. Procédé selon la revendication 11 ou 12, **caractérisé en ce que** les données données reçues sont représentées sur un écran (23) du téléphone mobile (2).

14. Procédé selon la revendication précédente, **caractérisé en ce que** les données représentées sont parcourues à l'aide de manipulations qui se choisissent au moyen d'éléments de commande (22) du téléphone mobile (2).

15. Procédé selon l'une des revendications 12 à 14, **caractérisé en ce que** des données sont amenées, en fonction de données mentionnées sélectionnées, par l'intermédiaire de l'interface électrique (3), à une interface sans contact du module d'extension (1), pour leur transmission à un dispositif extérieur (4).

16. Procédé selon l'une des revendications 12 à 15, **caractérisé en ce que** des données sont envoyées au moyen de messages courts, en fonction de données mentionnées sélectionnées, à un centre de services, par l'intermédiaire d'un réseau téléphonique mobile.

17. Procédé selon l'une des revendications 11 à 16, **caractérisé en ce qu'**il est lancé au moyen d'éléments de commande (22) du téléphone mobile (2).

18. Procédé selon l'une des revendications 11 à 17, **caractérisé en ce qu'**il est lancé au moyen d'un signal qui est reçu par l'intermédiaire de l'interface électrique (3).
